# EUROPÄISCHE PATENTSCHRIFT

(11) **EP 3 832 179 B1**
(45) Veröffentlichungstag und Bekanntmachung des Hinweises auf die Patenterteilung: **22.11.2023**
(21) Anmeldenummer: 19213078.9
(22) Anmeldetag: 03.12.2019
(51) Int. Cl.: A22C 11/02, F16K 1/36, F16K 3/24, F16K 5/04, F16K 51/00

(54) **DOSIERVENTIL UND FÜLLMASCHINE ZUR DOSIERUNG VON NAHRUNGSMITTELN**
DOSING VALVE AND FILLING MACHINE FOR DOSING FOOD
SOUPAPE DE DOSAGE ET MACHINE DE REMPLISSAGE PERMETTANT DE DOSER DES DENRÉES ALIMENTAIRES

(43) Veröffentlichungstag der Anmeldung: 09.06.2021
(73) Patentinhaber: Albert Handtmann Maschinenfabrik GmbH & Co. KG, 88400 Biberach (DE)
(72) Erfinder: MAILE, Bernd, 88422 Oggelshausen (DE); KIBLER, Armin, 88436 Eberhardzell (DE); KIBLER, Andreas, 88250 Weingarten (DE)
(74) Vertreter: Grünecker Patent- und Rechtsanwälte PartG mbB

(56) Entgegenhaltungen:
- EP-A1- 0 077 910
- EP-A1- 0 083 467
- EP-A1- 2 215 912
- WO-A1-2019/067891
- DE-A1- 1 432 504
- DE-B- 1 288 857
- DE-C- 534 874
- GB-A- 1 591 803
- GB-A- 2 569 652
- NL-A- 8 302 466
- US-A- 1 701 433
- US-A- 2 689 669
- US-A- 2 825 491
- US-A- 3 572 383
- US-A1- 2008 148 965
- US-B2- 6 910 348

## Beschreibung

Die Erfindung betrifft eine Füllmaschine mit einem Dosierventil zur Dosierung von pastösen Massen, insbesondere von Nahrungsmitteln gemäß Anspruch 1.

Aus der EP0077910 A1 ist ein Dosierventil bekannt, das konisch zuläuft, um Nachtropfen zu verhindern. Ein elastisches Formteil ist am Stößelende angeordnet. Dieses Ventil weist keinen Einklemmbereich auf. Es zeigt auch nicht eine Härte von 30-80 Shore A.

Die EP0083467 A1 zeigt ein Ventil für einen Getränkeautomaten und ist entsprechend klein ausgelegt und ist nicht geeignet für pastöse Massen. Es hat keinen Einklemmbereich für einen Finger.

Solche Ventile werden in der Nahrungsmittelindustrie an Produktionseinrichtungen und -maschinen, zum Beispiel Vakuumfüllmaschinen zur Dosierung von flüssigen und pastösen Massen, die auch stückige Einlagen beinhalten können, angebaut. Ein solches Dosierventil dient zum Befüllen von Behältnissen, wie zum Beispiel Schalen, Tiefziehformen etc.

Solche Dosierventile öffnen sich mittels eines Antriebs mit dem Start des Ausstoßvorgangs des zu fördernden Produkts und schließen nach Ende der auszustoßenden Portion. Das Produkt wird dabei definiert, portioniert und getrennt. Prinzipbedingt wird das Ventil möglichst am Ende einer Verrohrung, direkt am Auslass einer Fülleinrichtung eingesetzt.

Je nach Produkt und Anwendung kommen verschiedene Ventiltypen zum Einsatz.

Oft werden Ventile mit einem Ausstoßkolben verwendet, wie beispielsweise in der EP2215912 offenbart ist. In einem T-Stück wird seitlich das Produkt in das Ventil geführt. In der senkrechten Achse wird ein Kolben axial bewegt, der somit den Zulauf öffnet oder schließt.

Ventile mit einer Verjüngung am Auslass (Düse) werden oft als Sitzventil ausgeführt. Zum Schließen des Ventils wird ein Stempel axial bewegt, bis dieser auf der Kante der Düse anliegt und somit das Ventil verschließt.

Bei einer weiteren Variante wird der Kolben nicht axial, sondern radial bewegt (Drehkolbenventil). Durch die Anordnung des Ein- und Auslasses im Gehäuse und dem Verbindungskanal im Drehkolben kann das Ventil durch Drehen des Kolbens geöffnet oder verschlossen werden.

Der Durchmesser der Auslassöffnung des Ventils ist in der Regel so groß, dass man zum Beispiel mit einem Finger in die Auslassöffnung eingreifen kann. Die Ventile sind dabei so ausgeführt, dass beim Erreichen der Gefahrenstelle durch den Finger dieser eingeklemmt und schwer gequetscht oder abgetrennt werden kann. Grund dafür sind die hohen Schließkräfte und die Gestaltung der Schließkanten. Es muss also durch Sicherheitsabstände, mechanischen Schikanen, Schutzeinhausungen, Sicherheitssensoren, etc. verhindert werden, dass die Gefahrenstelle, das heißt, der Einklemmbereich durch einen Finger erreicht werden kann.

Diese Sicherheitsmaßnahmen wirken sich jedoch aus verschiedenen Gründen nachteilig auf den Arbeitsablauf aus, insbesondere wirken sich derartige Maßnahmen nachteilig auf die Produktionsgeschwindigkeit, das Handling, die Zugänglichkeit, Produktschonung etc. aus. Oft ist es baulich auch nicht möglich, mechanisch trennende Schutzeinrichtung vorzusehen.

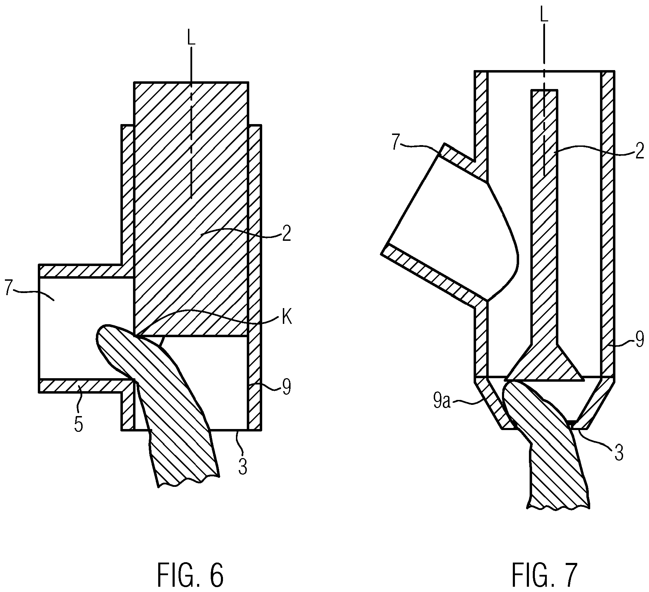

Figur 6 zeigt beispielsweise ein Dosierventil mit einem Kolben 2, der nach unten bewegbar ist, in einem Rohr 9, um die Ventilöffnung 3 zu verschließen. Dabei bewegt sich die Kante K im Rohr 9 nach unten, während ein Finger durch die Öffnung 3 bis zu dem Zulaufrohr 7 eingeführt werden kann. Somit kann der Finger zwischen dem beweglichen Ventilelement 2 und dem Gehäuse 5, das heißt der Schneidkante im Übergangsbereich von dem Zulaufrohr 7 zu dem Rohr 9, eingeklemmt werden, wobei die an die untere Fläche des Zulaufrohrs 7 angrenzende Schneidkante und die Kante K auf gegenüberliegenden Seiten des Einklemmbereichs liegen, jedoch seitlich zueinander versetzt sind, derart, dass ein Finger einer Scherkraft ausgesetzt wird. Figur 7 zeigt ein als Sitzventil ausgebildetes Ventil, bei dem ein Stempel 2 in Richtung Ventilöffnung 3 bewegt wird. Hier kann der Finger zwischen dem vorderen Ende des Ventilelements 2, und dem Gehäuse 5, das sich zur Ventilöffnung 3 hin verjüngt, eingeklemmt werden, sodass ebenfalls schwere Verletzungen möglich sind.

Hiervon ausgehend liegt der vorliegenden Erfindung die Aufgabe zugrunde, eine Füllmaschine mit einem Dosierventil zur Dosierung von Nahrungsmitteln bereitzustellen, wobei das Dosierventil auf einfache Art und Weise eine ausreichende Sicherheit für das Bedienpersonal gewährleistet.

Erfindungsgemäß wird diese Aufgabe durch die Merkmale des Anspruchs 1 gelöst.

Das erfindungsgemäße Dosierventil weist ein bewegliches Ventilelement auf, das eine Ventilöffnung, über die eine Portion ausgestoßen wird, öffnet und schließt.

Das Ventilelement weist an seinem in Schließrichtung betrachtet vorderem Endbereich ein elastisches Material auf.

Das bedeutet, dass wenn zum Beispiel ein Finger durch die Ventilöffnung in das Innere des Ventilgehäuses greift, wenn das Ventilelement sich in Schließrichtung bewegt, sich das elastische Material bei Kontakt mit dem Finger der Geometrie des Fingers leicht anpassen kann und so eine gleichmäßige Kraftverteilung ermöglicht. Somit ist gemäß der vorliegenden Erfindung das Dosierventil so gestaltet und ausgelegt, dass für den Finger bei Erreichen der Gefahrenstelle keine Gefahr für schwere Verletzungen besteht. Dadurch, dass das elastische Material im vorderen Endbereich angeordnet ist, kann ein elastisches Material auch vorteilhafterweise zum Abdichten der Ventilöffnung als Dichtmaterial dienen.

Der vordere Endbereich erstreckt sich dabei vorzugsweise mindestens 5 mm bis 20 mm vom unteren Ende in Axialrichtung nach oben.

Alternativ oder zusätzlich kann das elastische Material auch an der Innenseite des Ventilgehäuses angeordnet sein und zwar an einer Stelle, an der ein Finger durch das sich in Schließrichtung bewegende Ventilelement eingeklemmt werden kann. Insbesondere ist das elastische Material im Fall eines Sitzventils an einem Randbereich um die Ventilöffnung, das heißt in dem Düsenbereich angeordnet oder aber bei Ventilen, die Ventilverschlusskolben aufweisen, in einem Bereich eines Übergangs einer Zulaufleitung in einen zylindrischen Rohrabschnitt, in dem das Ventilelement zum Verschließen der Ventilöffnung bewegt wird.

Bei einem Drehkolbenventil kann das elastische Material im Bereich einer Seitenfläche der Ventilöffnung angeordnet sein, d.h. der Seitenfläche, die in eine Richtung entgegen der Schließrichtung gerichtet ist.

Vorteilhafterweise wird die mögliche Kontaktfläche im Einklemmbereich vergrößert, um die Kraftverteilung auf den Finger zu maximieren und somit die Flächenpressung zu minimieren. Das heißt, dass es keine scharfen Kanten gibt, die einen Finger abtrennen könnten.

Dies wird insbesondere so realisiert, dass im Endbereich des Ventilelements der Durchmesser des Ventilelements in Schließrichtung abnimmt. Somit kann insbesondere eine zur Schließrichtung des Ventilelements geneigte Seitenkontaktfläche entstehen, die im Fall eines Einklemmens flächig auf dem Finger aufliegt und somit den Druck auf den Finger minimieren kann. Alternativ kann der Endbereich des Ventilelements auch konvex ausgebildet werden Die der Seitenkontaktfläche des Ventilelements gegenüberliegende Fläche, z.B. der düsenförmige Randbereich um die Ventilöffnung kann dann konkav ausgebildet sein.

Gemäß einem bevorzugten Ausführungsbeispiel wird ein Einklemmbereich von einer in Schließrichtung des Ventilelements geneigten Seitenkontaktfläche des Ventilelements und einer zur Schließrichtung des Ventilelements geneigten Seitenkontaktfläche des Ventilgehäuses begrenzt, wobei sich die Flächen gegenüberliegen oder seitlich versetzt zueinander auf gegenüberliegenden Seiten des Einklemmbereichs angeordnet sind. Durch die Seitenkontaktflächen kann der auf einen Finger ausgeübte Druck minimiert werden.

Dadurch, dass beispielsweise ein eingeklemmter Finger von zwei Flächen begrenzt wird, kann der Druck, der auf den Finger ausgeübt wird, im Vergleich zu scharfen Kanten minimiert werden.

Unter Einklemmbereich versteht man den Bereich zwischen dem Ventilelement und dem Ventilgehäuse, in dem ein länglicher Finger durch Bewegung des Ventilelements eingeklemmt werden kann. Dabei kann die Klemmstelle entweder so ausgebildet sein, dass der Finger zwischen dem vorderen Bereich des Ventilelements und einem gegenüberliegenden Bereich eingeklemmt wird oder aber zwischen dem vorderen Bereich des Ventilelements und einem seitlich dazu versetzten Bereich des Ventilgehäuses, zum Beispiel der unteren Fläche einer Zuleitung oder einer abgeschrägten Schneidkante, so dass der Finger einer Scherwirkung ausgesetzt wäre.

Insbesondere kann das Ventilgehäuse an seiner Innenseite eine Seitenkontaktfläche aufweisen, die sich schräg zur Schließrichtung des Ventilelements erstreckt und an der ein eingeklemmter Finger anliegt, wenn er durch das Ventilelement eingeklemmt wird, wobei die Seitenkontaktfläche zum Beispiel in folgenden Bereichen angeordnet sein kann:
- in einem Randbereich um die Ventilöffnung, das heißt, dass die Seitenkontaktfläche düsenförmig um die Ventilöffnung angeordnet ist; im verschlossenen Zustand des Dosierventils liegt dabei die Seitenkontaktfläche dem Endbereich des Ventilelements gegenüber,
- an einer Seitenfläche der Ventilöffnung; d.h., beispielsweise die Fläche einer Ventilöffnung, die bei einem Drehkolbenventil zu einer Seite entgegengesetzt zur Drehrichtung bzw. Schließrichtung gerichtet ist,
- in einem Übergangsbereich zwischen einer Zuleitung und einem zylindrischen Rohrabschnitt in dem das Ventilelement bewegt wird- das heißt zum Beispiel in der unteren Rohrfläche der Zuleitung, die unter einem Winkel kleiner 90°, insbesondere 15° - 60° in den Rohrabschnitt mündet oder in eine abgeschrägte Schneidkante.

Erfindungsgemäß wird das Dosierventil von einer Steuereinrichtung angesteuert, derart, dass die Schließkraft auf einen vorbestimmten Wert beschränkt ist, insbesondere auf einen Wert < 135 N. Entsprechendes dient auch wesentlich, insbesondere in Kombination mit den zuvor genannten Maßnahmen, zum Schutz vor Verletzungen.

Gemäß einem bevorzugten Ausführungsbeispiel ist das Dosierventil als Sitzventil ausgebildet und weist als Ventilelement einen sich axial beweglichen Stempel auf, der eine am unteren Ende einer konisch zulaufenden Düse angeordnete Ventilöffnung verschließt. Bei einer solchen Ventilanordnung ist es besonders vorteilhaft, dass durch die konisch zulaufende Düse des Ventils eine Seitenkontaktfläche vergrößert ist. Wenn dann die Spitze des beweglichen Stempels ein elastisches Material aufweist, insbesondere als Gummispitze ausgebildet ist, können Verletzungen verhindert werden. Wenn dann die Stempelspitze ebenfalls nach unten hin zuläuft, wird die Kontaktfläche an dieser Stelle ebenfalls vergrößert, was den Druck noch weiter minimiert.

Bei einem anderen Ausführungsbeispiel ist das Ventilelement derart aufgebaut, dass es einen axial beweglichen Ausstoßkolben aufweist, der die Ventilöffnung in einem Zulaufrohr öffnet und schließt. Wenn hier ein Finger durch die Ventilöffnung bis zum Zulaufrohr eindringt, kann beispielsweise durch das elastische Material am Vorderende des Ausstoßkolbens, d.h. durch die elastische Kolbenspitze, verhindert werden, dass es zu schwerwiegenden Verletzungen kommt. Wenn dann noch insbesondere, wie zu vor beschrieben, der Endbereich des Ausstoßkolbens eine geneigte Seitenkontaktfläche aufweist und auch der Übergangsbereich von dem Zulaufrohr zu dem zylindrischen Rohr abgeschrägt ausgebildet ist, erhöht dies den Schutz noch zusätzlich.

Es ist auch möglich, dass das Dosierventil als Drehkolbenventil ausgebildet ist und als bewegliches Ventilelement einen Drehkolben aufweist, der die Öffnung durch Drehen öffnet und verschließt. Auch hier kann gemäß der vorliegenden Erfindung durch den Einsatz des elastischen Materials verhindert werden, dass beim Verschließen ein über die Ventilöffnung eingeführter Finger wesentlich verletzt wird.

Vorteilhafterweise ist das elastische Material insbesondere ein Material aus der Gruppe der Elastomere.

Das elastische Material weist erfindungsgemäß eine Härte von 30 - 80 Shore A nach DIN ISO 7619-1 auf.

Vorteilhafterweise soll der Druck auf den eingeklemmten Gegenstand, insbesondere Finger nicht höher als 60 N/cm² betragen.

Vorteilhafterweise verschließt das elastische Material die Ventilöffnung und führt somit zu einer besonders guten Abdichtung. Das heißt, dass das elastische Material ebenso als Dichtmaterial dienen kann.

Erfindungsgemäß ist das Dosierventil am Ende eines Auslassrohrs der Füllmaschine angeordnet.

Die vorliegende Erfindung wird nachfolgend unter Bezugnahme folgender Figuren näher erläutert.
Figur 1 zeigt schematisch eine erste Ausführungsform gemäß der vorliegenden Erfindung.
Figuren 2a bis 2c zeigen das in Figur 1 gezeigte Ausführungsbeispiel in verschiedenen Schließpositionen.
Figur 3 zeigt ein weiteres Ausführungsbeispiel gemäß der vorliegenden Erfindung
Figuren 4a bis c zeigen das in Figur 3 gezeigte Ausführungsbeispiel in verschiedenen Schließpositionen
Figuren 5a bis c zeigen ein weiteres Ausführungsbeispiel gemäß der vorliegenden Erfindung in verschiedenen Schließpositionen
Figur 6 und 7 zeigen Dosierventile gemäß dem Stand der Technik.

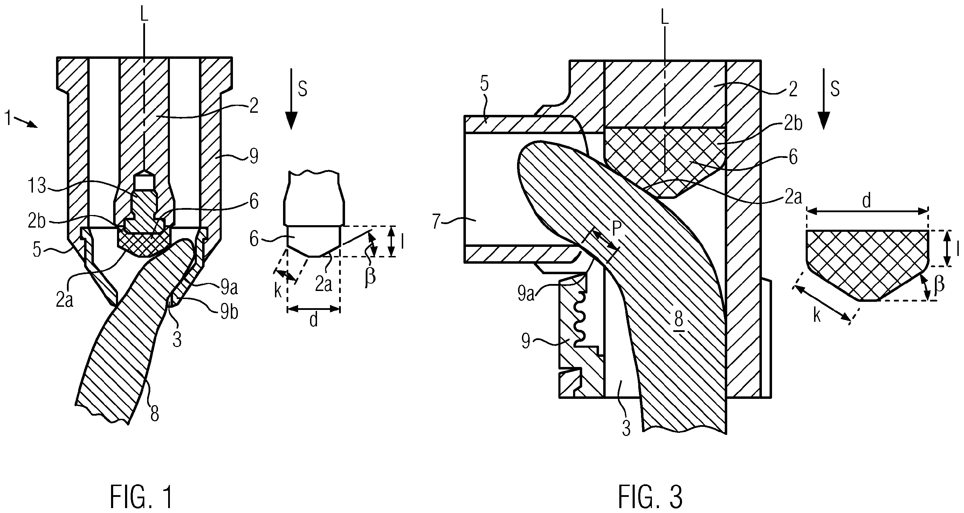

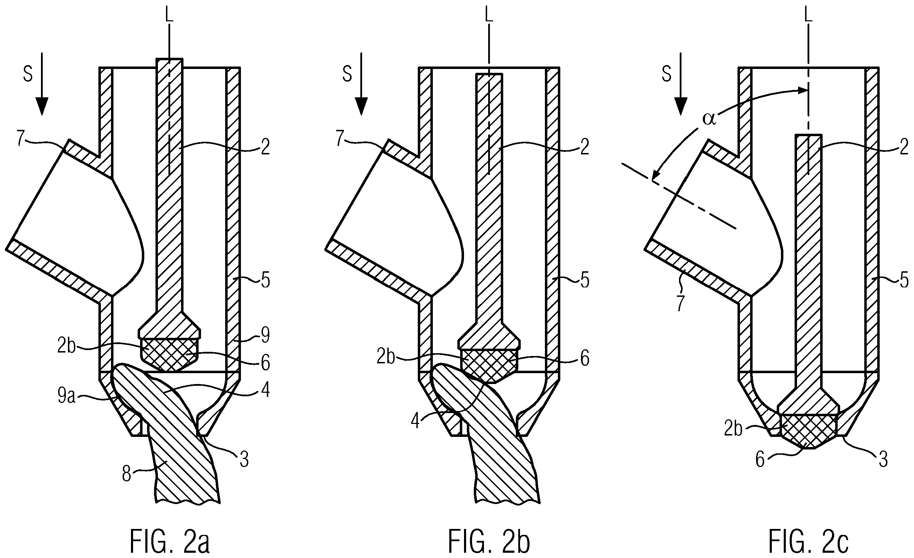

Figuren 1 und 2a, b, c zeigen ein Ausführungsbeispiel eines Dosierventils 1 gemäß der vorliegenden Erfindung.

Dieses Dosierventil 1 ist als Sitzventil ausgeführt und weist ein Zulaufrohr 7 auf, das zum Beispiel mit einer Verrohrung einer Füllmaschine, die einen Lebensmittelstrang fördert, verbunden ist. Insbesondere dient das Dosierventil 1 zur Dosierung von flüssigen und pastösen Massen, die auch stückige Einlagen beinhalten können. Ein solches Dosierventil 1 dient insbesondere zum Befüllen von Behältnissen, wie zum Beispiel Schalen, Tiefziehformen etc.

Das Zulaufrohr 7 mündet in ein Rohr 9, das an seinem unteren Ende eine Ventilöffnung 3 aufweist, über die das Lebensmittel in Einzelportionen ausgestoßen wird. Das Dosierventil 1 weist hier ein bewegliches Ventilelement 2 auf, das in dem Rohr 9 auf und ab bewegbar ist und in Schließrichtung S die Ventilöffnung 3 verschließen kann. Das Ventilelement 2 bewegt sich mittels eines Antriebs entgegen der Schließrichtung, um die Ventilöffnung 3 zu öffnen. Nach dem Ausstoßvorgang des zu fördernden Produkts bewegt sich dann das Ventilelement 2 wieder nach unten.

Der Zulauf bzw. das Zulaufrohr 7 mündet unter einem Winkel α von < 90°, insbesondere 15° - 60° in das Rohr 9.

Die Ventilöffnung 3 weist eine Fläche in einem Bereich von 50 mm² - 2000 mm² auf, d.h. sie ist groß genug, dass ein Finger 8 in die Öffnung greifen kann.

Wie insbesondere aus Figur 1 hervorgeht, weist das Ventilelement 2 an seinem, in Schließrichtung S betrachtet, vorderen Endbereich 2b ein elastisches Material 6 auf. Das elastische Material ist beispielsweise ein Material aus der Gruppe der Elastomere. Das elastische Material weist insbesondere eine Härte von 30 - 80 Shore A nach DIN ISO 7619-1 auf.

Der vordere Endbereich 2b erstreckt sich dabei vorzugsweise mindestens um eine Länge I von 5 mm - 20 mm vom unteren Ende in Axialrichtung, d.h. entgegen der Schließrichtung nach oben.

Diese Abmessung ist ausreichend um einen Finger 8, der in einen Einklemmbereich 4 zwischen Ventilelement 2 und Gehäuse 5 gelangt, zu schützen.

Das bedeutet, dass wenn zum Beispiel der Finger 8, hier der Prüffinger 8, über die Ventilöffnung 3 in das Innere des Ventilgehäuses 5 greift, sich das elastische Material 6 bei Kontakt mit dem Finger 8, der Geometrie des Fingers 8 leicht anpassen kann und so eine gleichmäßige Kraftverteilung ermöglicht. Für den Finger 8 besteht somit bei Erreichen der Gefahrenstelle keine Gefahr für schwere Verletzungen. Dadurch, dass das elastische Material im vorderen Endbereich angeordnet ist, kann ein elastisches Material auch vorteilhafterweise zum zusätzlichen Abdichten der Ventilöffnung 3 als Dichtmaterial dienen. Das elastische Material 6 kann am Ventilelement 2 angeklebt sein oder über eine Befestigungseinrichtung 13 abnehmbar am oberen Teil des Ventilelements 2 befestigt sein, sodass es bei Abnutzung ausgetauscht werden kann.

Vorteilhafterweise wird die mögliche Kontaktfläche im Einklemmbereich 4, d.h. also zwischen Ventilelement 2 und dem Ventilgehäuse 5 vergrößert, um die Kraftverteilung auf den Finger 8 zu maximieren und somit den Druck auf den Finger zu minimieren.

Dies wird, wie aus Figur 1 und 2 hervorgeht, dadurch erreicht, dass der Durchmesser d des Ventilelements 2, das heißt hier insbesondere des elastischen Materials 6, in Schließrichtung S abnimmt, d.h. die Außenkontur nach unten zuläuft. Somit kann eine zur Schließrichtung S des Ventilelements 2 geneigte vergrößerte umlaufende Seitenkontaktfläche 2a entstehen, die im Fall eines Einklemmens flächig auf dem Finger 8 aufliegt und somit den Druck auf den Finger minimieren kann.

Dabei nimmt der Durchmesser d beispielsweise von 20 - 50mm bis 0 - 30mm ab. Die Höhe k der geneigten umlaufenden Seitenkontaktfläche liegt dabei beispielsweise in einem Bereich von 10 - 30mm.

Der Winkel β zwischen einer Ebene, die senkrecht zur Schließrichtung bzw. Längsachse L steht und der Seitenkontaktfläche 2a liegt vorzugsweise in einem Bereich von 15° - 60°. Das elastische Material 6 kann sich alternativ auch konvex nach unten in Richtung Ventilöffnung 3 erstrecken.

Ein derartig ausgelegtes Ende des Ventilelements 2 bietet einen sehr guten Schutz.

Wenn, wie hier der untere Bereich des Dosierventils 1 derart ausgestaltet ist, dass das Gehäuse 5 düsenförmig zur Ventilöffnung 3 zuläuft, ergibt sich eine geneigte Seitenkontaktfläche 9a in einem Randbereich um die Ventilöffnung 3, auf der ein Finger aufliegt, wenn er eingeklemmt wird. Vorzugsweise kann diese Fläche konkav ausgebildet sein. Das heißt, dass der Einklemmbereich 4 von einer zur Schließrichtung S des Ventilelements 2 geneigten Seitenkontaktfläche 2 a des Ventilelements 2 und einer zur Schließrichtung S des Ventilelements 2 geneigten Seitenkontaktfläche 9a des Ventilgehäuses 5 begrenzt wird, wobei die beiden Seitenkontaktflächen hier gegenüber liegen.

Das Dosierventil 1 wird von einer nicht dargestellten Steuereinrichtung angesteuert, die die Schließkraft des Ventilelements 2 auf einen vorbestimmten Wert beschränkt, nämlich auf einen Wert <135 N. Durch die oben genannte Ausgestaltung ergibt sich ein Druck auf einen eingeklemmten Gegenstand, zum Beispiel Finger, der nicht höher als 60 N/cm ² ist.

Wenn auch nicht in den Figuren dargestellt, kann zusätzlich oder alternativ auch das Ventilgehäuse im Einklemmbereich mit einem elastischen Material ausgestattet werden, bei dem Ausführungsbeispiel in den Figuren 1 und 2 beispielsweise im düsenförmigen zulaufenden Randbereich um die Ventilöffnung herum. Ein solches Material kann beispielsweise auf das Ventilgehäuse 5 innen aufgeklebt oder aufvulkanisiert werden.

Figuren 2a, 2b, 2c, zeigen das Dosierventil in unterschiedlichen Schließpositionen. In Figur 2a ist das Dosierventil 1 geöffnet. Hier kann ein Finger 8 über die Ventilöffnung 3 ins Innere des Ventils greifen. Schließt sich dann, wie in Figur 2b dargestellt, das Ventil, kann der Finger 8 eingeklemmt werden. Aufgrund der zuvor genannten Ausgestaltung kann jedoch das Verletzungsrisiko vermindert werden. In Figur 2c ist das Dosierventil 1 geschlossen, wobei das elastische Material 6 im unteren Endbereich in der Ventilöffnung 3 zu liegen kommt. Das Ventilelement ist in einem Bereich oberhalb des elastischen Materials etwas breiter ausgeführt und steht über das elastische Material seitlich über und bildet so eine Dichtstelle mit dem Ventilgehäuse 5 zum Abdichten der Ventilöffnung 3.

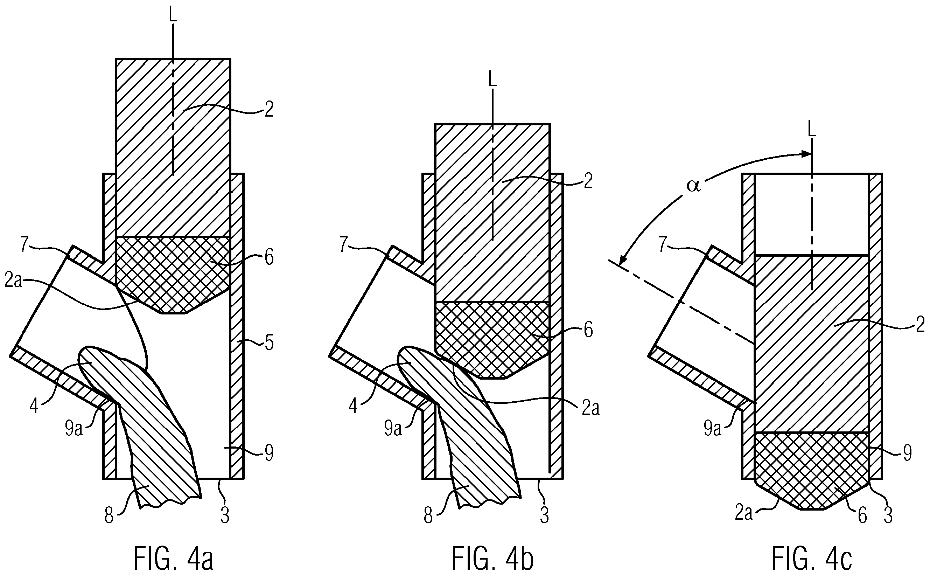

Figuren 3 sowie 4a, 4b, 4c zeigen ein weiteres Ausführungsbeispiel gemäß der vorliegenden Erfindung, das im Wesentlichen dem 1. Ausführungsbeispiel entspricht, so dass entsprechende Details nicht erneut erläutert werden. Der Unterschied zwischen den Ausführungsbeispielen liegt lediglich darin, dass das Dosierventil derart ausgebildet ist, dass als Ventilelement 2 ein axial beweglicher Ausstoßkolben vorgesehen ist, der die Ventilöffnung 3 öffnet und schließt.

Ebenso wie bei dem 1. Ausführungsbeispiel weist das Ventilelement 2 an seinem in Schließrichtung S betrachteten vorderen Endbereich 2b ein elastisches Material 6 auf, hier in Form einer elastischen Kolbenspitze.

In Figur 3 ist zu erkennen, dass der Durchmesser d des Ventilelements 2, das heißt hier insbesondere des elastischen Materials 6, in Schließrichtung S abnimmt, d.h. die Außenkontur nach unten zuläuft. Somit kann eine zur Schließrichtung S des Ventilelements 2 geneigte, vergrößerte umlaufende Seitenkontaktfläche 2a entstehen, die im Fall eines Einklemmens flächig auf dem Finger 8 aufliegt und somit den Druck auf den Finger minimieren kann.

Dabei nimmt der Durchmesser d beispielsweise von 20 - 50mm bis 0 - 30mm ab. Die Höhe k der geneigten umlaufenden Seitenkontaktfläche liegt dabei beispielsweise in einem Bereich von 10 - 30mm.

Der Winkel Beta zwischen einer Ebene, die senkrecht zur Schließrichtung bzw. Längsachse L steht, und der Seitenkontaktfläche 2a liegt in einem Bereich von 15° - 60°. Das elastische Material 6 kann sich alternativ auch konvex nach unten in Richtung Ventilöffnung 3 erstrecken.

Hier schließt der Ausstoßkolben die Ventilöffnung 3, indem er sich in einen Bereich im Rohrabschnitt 9 unterhalb der Zuleitung 7 hinein bewegt. Bei der Bewegung nach unten kann der Ausstoßkolben die abzufüllende Masse abtrennen bzw. abschneiden.

Ebenso wie bei dem zuvor beschriebenen Ausführungsbeispiel wird im Einklemmbereich ein Finger beispielsweise durch 2 Seitenkontaktflächen 9a, 2a eingeklemmt, wobei die Flächen hier auf gegenüberliegenden Seiten des Fingers, jedoch seitlich versetzt zueinander angeordnet sind.

Bei der Ausführung in Figur 3 ist der Übergangsbereich zwischen der Zuleitung 7 und dem zylindrischen Rohrabschnitt 9, in dem sich das Ventilelement 2 bewegt, umlaufend flächig ausgebildet, d.h. hier in Form einer abgeschrägten Schneidkante 9a, die vorzugsweise zumindest eine Abmessung p von 10 - 30mm aufweist und unter einem Winkel von 15° - 60° zur Längsachse L des Ventils verläuft.

Wie in den Figuren 4a, 4b, 4c dargestellt ist, kann aber auch das Zulaufrohr 7 nicht senkrecht zur Längsachse L des Ventils münden, sondern unter einem Winkel von 15° - 60° in den Rohrabschnitt 9 einmünden. Somit ergibt sich die Seitenkontaktfläche 9a, auf der ein Finger 8 im Einklemmbereich 4 im unteren Bereich der Fläche des Zulaufrohrs 7 zu liegen kommt.

Figur 4a zeigt das Dosierventil in geöffneter Position. Figur 4b zeigt, wie sich das Ventilelement 2 in Schließrichtung S bewegt und einen Finger 8 eingeklemmt.

Figur 4c zeigt das Ventil in geschlossener Position. Wie aus Figur 4c hervorgeht, wird das Ventilelement 2 so weit nach unten bewegt, bis ein Bereich des Ventilelements 2, das über dem elastischen Material 6 angeordnet ist und beispielsweise aus Metall gefertigt ist, unterhalb der Zuleitung 7 das Rohr 9 abdichten kann.

Auch bei diesem Ausführungsbeispiel kann die Seitenkontaktfläche 9a, auch wenn dies nicht dargestellt ist, mit einem elastischen Material versehen werden, was den Finger nochmals zusätzlich schützen kann.

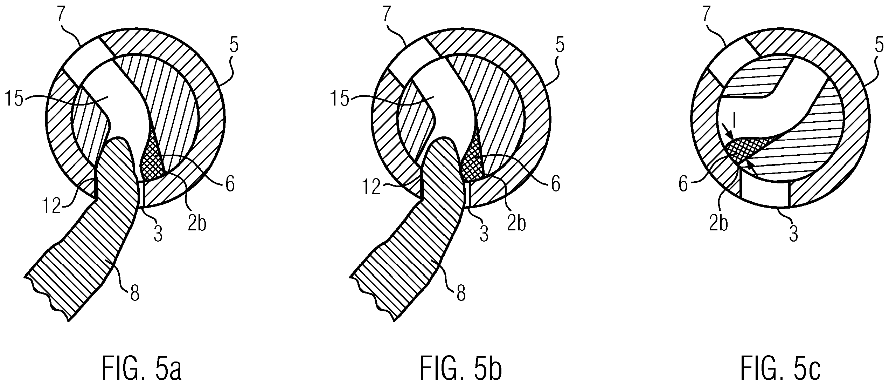

Figuren 5a, 5b und 5c zeigen eine weitere Ausführungsform gemäß der vorliegenden Erfindung, die im Wesentlichen den vorherigen Ausführungsformen entspricht, wobei hier das Dosierventil als Drehkolbenventil ausgebildet ist und als bewegliches Ventilelement 2 einen Drehkolben aufweist, der die Ventilöffnung 3 durch Hin- und Herdrehen öffnet und schließt. Dabei ist, genau wie bei den zuvor beschriebenen Ausführungsbeispielen, ein elastisches Material 6 im vorderen Endbereich 2b des Ventilelements 2 angeordnet.

Das elastische Material ist hier z.B.keilförmig ausgebildet, d.h. die Breite I nimmt in Richtung Mitte ab.Die Breite I liegt etwa in einem Bereich zwischen 0 - 20mm und kann eine maximale Abmessung am aüßeren Rand zwischen 5 und 20 mm aufweisen die zur Mitte hin abnimmt, insbesondere bis auf 0

Ebenso wie bei den vorherigen Ausführungsbeispielen kann eine Seitenkontaktfläche 12 in der Öffnung 3, die zu einer Seite entgegen der Schließrichtung S gewandt ist, zusätzlich mit einem elastischen Material ausgestattet sein, um den Druck auf den Finger zu minimieren.

Figur 5a zeigt das Dosierventil in einer geöffneten Position, wobei ein Finger 8 in die Ventilöffnung 3 eingeführt wurde. Figur 5b zeigt, wie sich das Ventil schließt und der Finger 8 eingeklemmt wird. Figur 5c zeigt das Ventil in einer geschlossenen Position.

Die vorliegende Erfindung betrifft auch eine nicht dargestellte Füllmaschine mit einem erfindungsgemäßen Dosierventil, wobei das Dosierventil am Ausstoßende der Füllmaschine d.h. am Beginn oder am Ende einer Verrohrung angeordnet ist. Eine solche Füllmaschine kann eine Vakuumfüllmaschine mit einem Einfülltrichter und einer Förderpumpe für die abzufüllende Masse, z. B. das Lebensmittel sein.

Gemäß der vorliegenden Erfindung kann nun durch die Verwendung des elastischen Materials 6 die Verletzungsgefahr wesentlich reduziert werden. Da ein eingeklemmter Finger zusätzlich vorzugsweise nicht an scharfen Kanten aufliegt, sondern auf umlaufenden Flächen, kann der Druck und das Verletzungsrisiko nochmals reduziert werden. Die Begrenzung der Schließkraft reduziert das Verletzungsrisiko noch weiter.

## Patentansprüche

1. Füllmaschine mit einem Dosierventil (1) zur Dosierung von pastösen Massen, in Form von Nahrungsmitteln mit einem beweglichen Ventilelement (2), das eine Ventilöffnung (3), über die eine Portion ausgestoßen wird, öffnet und schließt, sowie einen Einklemmbereich zwischen dem Ventilelement (2) und einem Ventilgehäuse (5), in dem ein länglicher Finger durch Bewegung des Ventilelements (2) einklemmbar ist, wobei das Ventilelement (2) an seinem, in Schließrichtung (S) betrachtet, vorderen Endbereich (2b) ein elastisches Material (6) aufweist, das eine Härte von 30-80 Shore A aufweist, wobei das Dosierventil am Ausstoßende der Füllmaschine angeordnet ist, und wobei die Ventilöffnung (3) eine Fläche in einem Bereich von 50 mm² - 2000 mm² aufweist, wobei das Dosierventil von einer Steuereinrichtung ansteuerbar ist, derart, dass die Schließkraft des Ventilelements (2) auf einen vorbestimmten Wert kleiner 135 N beschränkbar ist.

2. Füllmaschine nach Anspruch 1, **dadurch gekennzeichnet, dass** an der Innenseite des Ventilgehäuses (5), an der ein Finger durch das sich in Schließrichtung (S) bewegende Ventilelement eigeklemmt werden kann, ein elastisches Material (6) angeordnet ist, insbesondere
an einem Randbereich (9a) um die Ventilöffnung (3) oder
an einer Seitenfläche (12) der Ventilöffnung (3),
oder
im Bereich eines Übergangs einer Zuleitung (7) in einen zylindrischen Rohrabschnitt (9),
in dem sich das Ventilelement (2) zum Verschließen der Ventilöffnung (3) bewegt.

3. Füllmaschine nach mindestens einem der Ansprüche 1-2, **dadurch gekennzeichnet,**
**dass** im Endbereich (2b) des Ventilelements (2) der Durchmesser (d) des Ventilelements (2) in Schließrichtung (S) abnimmt, insbesondere
der Endbereich des Ventilelements (2) eine zur Schließrichtung geneigte umlaufende Seitenkontaktfläche (2a) aufweist oder konvex ausgebildet ist.

4. Füllmaschine nach mindestens einem der Ansprüche 1-3, **dadurch gekennzeichnet, dass** ein Einklemmbereich (4) von einer in Schließrichtung (S) des Ventilelements (2) geneigten Seitenkontaktfläche (2a) des Ventilelements (2) und einer zur Schließrichtung des Ventilelements (2) geneigten Seitenkontaktfläche (9a) des Ventilgehäuses (5) begrenzt wird,
wobei sich die Flächen gegenüberliegen oder seitlich versetzt zueinander auf gegenüberliegenden Seiten des Einklemmbereichs (4) angeordnet sind.

5. Füllmaschine nach mindestens einem der Ansprüche 1- 4, **dadurch gekennzeichnet, dass** das Ventilgehäuse (5) an seiner Innenseite eine Seitenkontaktfläche (9a) aufweist, die sich schräg zur Schließrichtung des Ventilelements (2) erstreckt und an der ein eingeklemmter Finger anliegt, wenn er durch das Ventilelement eingeklemmt wird, wobei die Seitenkontaktfläche (9a) vorzugsweise
in einem Randbereich um die Ventilöffnung (3) angeordnet ist und im verschlossenen Zustand des Dosierventils dem Endbereich (2b) des Ventilelements gegenüberliegt oder
eine Seitenfläche der Ventilöffnung ist oder
in einem Übergangsbereich (9a) zwischen einer Zuleitung (7) und einem zylindrischen Rohrabschnitt (9), in dem sich das Ventilelement (2) bewegt, ausgebildet ist, insbesondere in Form einer unteren Rohrfläche der Zuleitung, die unter einem Winkel < 90°, insbesondere 15° - 60° in den Rohrabschnitt (9) mündet oder in Form einer abgeschrägten Schneidkante (9a).

6. Füllmaschine nach mindestens einem der Ansprüche 1-5, **dadurch gekennzeichnet, dass** das Dosierventil als Ventilelement (2) einen axial beweglichen Ausstoßkolben aufweist, der die Ventilöffnung (3) öffnet und schließt.

7. Füllmaschine nach mindestens einem der Ansprüche 1-5, **dadurch gekennzeichnet, dass** das Dosierventil (1) als Sitzventil ausgebildet ist und als Ventilelement (2) einen sich axial beweglichen Stempel aufweist, der die am unteren Ende einer konisch zulaufenden Düse angeordnete Ventilöffnung (3) verschließt.

8. Füllmaschine nach mindestens einem der Ansprüche 1-5, **dadurch gekennzeichnet, dass** das Dosierventil (1) als Drehkolbenventil ausgebildet ist und als bewegliches Ventilelement (2) einen Drehkolben aufweist, der die Ventilöffnung (3) durch Drehen öffnet und verschließt.

9. Füllmaschine nach mindestens einem der vorhergehenden Ansprüche, **dadurch gekennzeichnet, dass** das elastische Material (6) ein Material aus der Gruppe der Elastomere ist.

10. Füllmaschine nach mindestens einem der Ansprüche 1-9,
**dadurch gekennzeichnet, dass**
der Druck auf einen eingeklemmten Gegenstand nicht höher als 60 N/cm ² beträgt.

11. Füllmaschine nach mindestens einem der Ansprüche 1-10, **dadurch gekennzeichnet, dass** das elastische Material die Ventilöffnung (3) verschließt.

## Claims

1. Filling machine with a dosing valve (1) for dosing liquid or paste-like masses in the form of food products, with a movable valve element (2) which opens and closes a valve opening (3) through which a portion is discharged as well as a squeezing region between said valve element (2) and a valve housing (5) in which a finger can be squeezed by said valve element (2) movement wherein that said valve element (2) comprises elastic material (6) at its end region (2b) which when viewed in the closing direction (S) is the leading one and which has a hardness of 30-80 Shore A, wherein the dosing valve is arranged at the discharge end of said filling machine and wherein the valve opening (3) has an area in a range of 50mm2 -2000 mm2 and wherein said dosing valve can be actuated by a control device such that the closing force of the valve element (2) is limited to a predetermined value less than 135N.

2. Filling machine according to claim 1, **characterized in that** elastic material (6) is arranged on the inner side of said valve housing (5), on which a finger can be squeezed by said valve element moving in the closing direction (S), in particular
on an edge region (9a) around said valve opening (3), or
on a side surface (12) of said valve opening (3), or
in the region of a transition from a feed line (7) to a cylindrical pipe section (9) in which said valve element (2) moves to close said valve opening (3).

3. Filling machine according to at least one of the claims 1-2, **characterized in that** the diameter (d) of said valve element (2) in said end region (2b) of said valve element (2) decreases in the closing direction (S), in particular
the end region of said valve element (2) has a circumferential side contact surface (2a) that is inclined toward the closing direction or is formed to be convex.

4. Filling machine according to at least one of the claims 1-3, **characterized in that** a squeezing region (4) is defined by a side contact surface (2a) of said valve element (2) that is inclined in the closing direction (S) of said valve element (2) and a side contact surface (9a) of said valve housing (5) that is inclined toward the closing direction (S) of said valve element (2), where said surfaces are disposed opposite one another or are arranged laterally offset from one another on opposite sides of said squeezing region (4).

5. Filling machine according to at least one of the claims 1- 4, **characterized in that** said valve housing (5) has a side contact surface (9a) on its inner side which extends obliquely to the closing direction of said valve element (2) and against which a squeezed finger bears when squeezed by said valve element, where said side contact surface (9a) is preferably
arranged in an edge region around said valve opening (3) and, in the closed state of said dosing valve, is disposed opposite said end region (2b) of said valve element, or
is a side surface of said valve opening, or
is formed in a transition region (9a) between a feed line (7) and a cylindrical pipe section (9) in which said valve element (2) moves, is in particular in the form of a lower pipe surface of said feed line, which opens into said pipe section (9) at an angle of < 90°, in particular of 15° - 60°, or is in the form of a beveled cutting edge (9a).

6. Filling machine according to at least one of the claims 1- 5, **characterized in that** said dosing valve comprises an axially movable discharge piston as said valve element (2) which opens and closes said valve opening (3).

7. Filling machine according to at least one of the claims 1- 5, **characterized in that** said dosing valve (1) is configured as a seated valve and comprises an axially movable plunger as said valve element (2) which closes said valve opening (3) arranged at the lower end of a conically tapering nozzle.

8. Filling machine according to at least one of the claims 1- 5, **characterized in that** said dosing valve (1) is configured as a rotary piston valve and comprises a rotary piston as a movable valve element (2) which opens and closes said valve opening (3) by rotation.

9. Filling machine according to at least one of the preceding claims, **characterized in that** said elastic material (6) is in particular a material from the group of elastomers.

10. Filling machine according to at least one of the claims 1-9, **characterized in that** the pressure on a squeezed object is no greater than 60 N/cm².

11. Filling machine according to at least one of the claims 1-10, **characterized in that** said elastic material closes said valve opening (3).

## Revendications

1. Machine de remplissage comportant une vanne de dosage (1) pour le dosage de masses pâteuses alimentaires, avec un élément de vanne mobile (2) qui ouvre et ferme une ouverture de vanne (3) à travers laquelle une portion est éjectée, ainsi qu'une zone de pincement entre l'élément de vanne (2) et un boîtier de vanne (5), dans laquelle un doigt allongé peut être pincé par un déplacement de l'élément de vanne (2), dans laquelle l'élément de vanne (2) comporte un matériau élastique (6) à son extrémité avant (2b), en direction de fermeture (S), qui présente une dureté Shore A comprise entre 30 et 80, dans laquelle la vanne de dosage est agencée à l'extrémité d'expulsion de la machine de remplissage, et dans laquelle l'ouverture de vanne (3) présente une surface comprise entre 50 mm² et 2 000 mm² dans laquelle
la vanne de dosage peut être commandée par un dispositif de commande de telle manière que la force de fermeture de l'élément de vanne (2) peut être limitée à une valeur prédéterminée inférieure à 135 N.

2. Machine de remplissage selon la revendication 1, **caractérisée en ce qu'**un matériau élastique (6) est agencé sur le côté interne du boîtier de vanne (5), sur lequel un doigt peut être pincé par un déplacement de l'élément de vanne en direction de fermeture (S), en particulier
sur une zone de bord (9a) autour de l'ouverture de vanne (3), ou
sur une surface latérale (12) de l'ouverture de vanne (3), ou
dans la zone d'une transition d'une conduite d'alimentation (7) à une section de tube cylindrique (9) dans laquelle l'élément de vanne (2) se déplace pour fermer l'ouverture de vanne (3).

3. Machine de remplissage selon au moins l'une des revendications 1 et 2, **caractérisée en ce que**
à l'extrémité (2b) de l'élément de vanne (2), le diamètre (d) de l'élément de vanne (2) diminue en direction de fermeture (S), en particulier
l'extrémité de l'élément de vanne (2) présente une surface de contact latérale circonférentielle (2a) inclinée en direction de fermeture ou est de forme convexe.

4. Machine de remplissage selon au moins l'une des revendications 1 à 3, **caractérisée en ce qu'**une zone de pincement (4) est délimitée par une surface de contact latérale (2a) de l'élément de vanne (2) qui est inclinée en direction de fermeture (S) de l'élément de vanne (2), et une surface de contact latérale (9a) du boîtier de vanne (5) qui est inclinée en direction de fermeture de l'élément de vanne (2),
dans laquelle les surfaces sont opposées ou décalées latéralement l'une par rapport à l'autre sur des côtés opposés de la zone de serrage (4).

5. Machine de remplissage selon au moins l'une des revendications 1 à 4, **caractérisée en ce que** le boîtier de vanne (5) présente une surface de contact latérale (9a) sur son côté interne, qui s'étend obliquement par rapport à la direction de fermeture de l'élément de vanne (2) et contre laquelle s'appuie un doigt pincé lorsqu'il est pincé par l'élément de vanne, dans laquelle la surface de contact latérale (9a) est préférablement
agencée dans une zone de bord autour de l'ouverture de vanne (3) et, à l'état fermé de la vanne de dosage, opposé à l'extrémité (2b) de l'élément de vanne, ou
une surface latérale de l'ouverture de vanne, ou
formée dans une zone de transition (9a) entre une conduite d'alimentation (7) et une section de tube cylindrique (9) dans laquelle se déplace l'élément de vanne (2), en particulier sous la forme d'une surface de tube inférieure de la conduite d'alimentation, qui débouche dans la section de tube (9) sous un angle inférieur à 90°, et en particulier compris entre 15° et 60°, ou sous la forme d'un bord tranchant biseauté (9a).

6. Machine de remplissage selon au moins l'une des revendications 1 à 5, **caractérisée en ce que** la vanne de dosage comporte un piston éjecteur mobile axialement comme élément de vanne (2) qui ouvre et ferme l'ouverture de vanne (3) .

7. Machine de remplissage selon au moins l'une des revendications 1 à 5, **caractérisée en ce que** la vanne de dosage (1) est conformée comme une vanne à siège et comporte un poinçon mobile axialement comme élément de vanne (2) qui ferme l'ouverture de vanne (3) disposée à l'extrémité inférieure d'une buse conique.

8. Machine de remplissage selon au moins l'une des revendications 1 à 5, **caractérisée en ce que** la vanne de dosage (1) est conformée comme une vanne à piston rotatif et comporte un piston rotatif en tant qu'élément de vanne mobile (2) qui ouvre et ferme l'ouverture de vanne (3) en tournant.

9. Machine de remplissage selon au moins l'une des revendications précédentes, **caractérisée en ce que** le matériau élastique (6) est un matériau du groupe des élastomères.

10. Machine de remplissage selon au moins l'une des revendications 1 à 9, **caractérisée en ce que** la pression sur un objet pincé n'est pas supérieure à 60 N/cm².

11. Machine de remplissage selon au moins l'une des revendications 1 à 10, **caractérisée en ce que** le matériau élastique ferme l'ouverture de vanne (3).
